# EUROPÄISCHE PATENTANMELDUNG

(11) **EP 3 667 627 A1**
(43) Veröffentlichungstag der Anmeldung: **17.06.2020**
(21) Anmeldenummer: 19213398.1
(22) Anmeldetag: 04.12.2019
(51) Int. Cl.: G07F 11/42

(54) **AUTOMATISCHES BEHÄLTER-LAGER SOWIE VERFAHREN ZU SEINEM BETRIEB**

(30) Priorität: 13.12.2018 DE 102018132062
(71) Anmelder: Völkl Patente GmbH & Co. KG, 83052 Bruckmühl (DE)
(72) Erfinder: Völkl, Thomas, 83052 Bruckmühl (DE)
(74) Vertreter: Weickmann & Weickmann PartmbB

(57) **Zusammenfassung**

Um ein Behälter-Lager 50 für Gläser G oder Flaschen F, vorzugsweise gekühlt, vorzuhalten, werden diese auf in Tiefenrichtung 51' des Behälter-Lagers 50 nebeneinander und in mehreren Etagen übereinander verlaufenden Abstellleisten 55 abgestellt und vorgehalten.

Das automatische Entnehmen erfolgt mittels einer Zugstange 54 mit aktivierbaren und deaktivierbaren Anschlägen 56 unterhalb der Böden der Gläser oder Flaschen in der Abstell-Leiste 55, die von einer Entnahme-Einheit 66 in Zugrichtung 54' sowie entgegen der Zugrichtung -54' bewegt werden kann zum Entnehmen des jeweils auf einer Abstell-Leiste 55 in vorderster Position stehenden Glases oder Flasche.

Die Entnahmeeinheit 66 ist Bestandteil des Entnahme-Förderers 60, der in Querrichtung 51" sowie in der vertikalen Richtung 51"" bewegbar ist, und auf dessen Obertrum 60a der entnommene Behälter gestellt wird, um ihn mittels dieses Entnahme-Förderers 60 zu einer Entnahme-Öffnung 61 im meist isolierten Lager-Gehäuse 52 des Behälter-Lagers 50 zu bringen.

## Beschreibung

### I. Anwendungsgebiet

Die Erfindung betrifft die Bereitstellung von für den Ausschank von Getränken benötigten Behältern, insbesondere noch geschlossenen Flaschen oder unterschiedlichen Arten von Gläsern, vorzugsweise direkt an der Schankstation oder einer Übergabe-Position für die Bedienung.

### II. Technischer Hintergrund

Da auch in der Gastronomie die Personalkosten einen der Haupt-Kostenfaktoren darstellen, der darüber hinaus im Steigen begriffen ist, und zusätzlich auch die Verfügbarkeit von Gastronomie-Personal immer schwieriger wird, gibt es Lösungen, um den Personaleinsatz in der Gastronomie zu senken.

Zum Einen wird versucht, den Einschenk-Vorgang teilweise zu automatisieren, und dadurch Schankpersonal einzusparen.

Des Weiteren wird schon immer versucht, den Zugriff auf die benötigten Gläser und Flaschen für das Schankpersonal möglichst einfach zu gestalten, indem sich die benötigten Gläser und Flaschen im unmittelbaren Griffbereich des Schankpersonals befinden.

Dies bedeutet in aller Regel, dass sich
- Flaschen in gekühlten Schrank-Auszügen im unteren Bereich der Theke befinden
- verschiedene Arten von Gläsern in Schränken und Regalen in Griffhöhe oberhalb der Schankstation oder hinter der Schankstation befinden.

Diese Lösungen haben jedoch den Nachteil, dass unmittelbar an der Schankstation in der Regel nur ein relativ begrenzter Raum zum Vorhalten gerade von Gläsern zur Verfügung steht, und diese in einem relativ schnellen Turnus wieder gereinigt und neu benutzt werden müssen.

Dies geschieht entweder manuell vom Schankpersonal selbst in einer dortigen Spüle, was jedoch hygienisch unbefriedigend ist, oder in einer - dann entfernt von der Schankstation positionierten - Spülmaschine, was wiederum das Ein- und Ausräumen der Spülmaschine erfordert sowie das Einräumen der gespülten Gläser in die Schränke oder Regale, in denen die Gläser vorgehalten werden.

Vor allem bewirkt dies jedoch zu Stoßzeiten, das gerade eben erst gespülte und noch heiße Gläser wieder benutzt werden, und dem Gast zusammen mit einem gekühlten und möglichst lange kühl zu haltenden Getränk serviert werden, was regelmäßig für den Gast unbefriedigend ist.

### III. Darstellung der Erfindung

### a) Technische Aufgabe

Es ist daher die Aufgabe gemäß der Erfindung, ein wenigstens teilweise automatisch betreibbares Behälter-Lager zur Verfügung zu stellen, sowie ein Verfahren zum Betrieb des Behälter-Lagers.

### b) Lösung der Aufgabe

Diese Aufgabe wird durch die Merkmale der Ansprüche 1 und 12 gelöst. Vorteilhafte Ausführungsformen ergeben sich aus den Unteransprüchen.

### Behälter-Lager:

Das Behälter-Lager umfasst vorzugsweise ein Lager-Gehäuse, dessen Inneres gekühlt werden kann, sodass auch sichergestellt ist, dass die Gläser, die aus dem Behälter-Lager entnommen werden und in die eingeschenkt wird, kühl sind und nicht von einem vorherigen Waschvorgang noch erhitzt sind.

Dadurch können sowohl Gläser als auch gekühlt vorzuhaltende, gefüllte, meist noch geschlossene, Flaschen gemeinsam im gleichen Behälter-Lager untergebracht werden.

Da die aus dem Behälter-Lager zur Verfügung zu stellenden Behälter an einer immer gleichen Übergabe-Position bereitgestellt werden, kann von dort aus ein Zufuhr-Förderer die Behälter zur Schankstation transportieren, so dass das Behälter-Lager auch relativ weit entfernt von der Schankstation aufgestellt werden kann, beispielsweise außerhalb des Schankraumes, und dadurch das Volumen des Behälter-Lagers wesentlich größer gewählt werden kann als der in unmittelbarer Umgebung der Schankstation zur Verfügung stehende Raum.

Das Behälter-Lager soll primär das automatische Entnehmen eines Behälters der gewünschten Art und zur Verfügung stellen an der Übergabeposition durch eine Entnahme-Vorrichtung ermöglichen.

Zu diesem Zweck befindet sich die Übergabeposition im inneren des Lager-Gehäuses unmittelbar an einer Entnahmeöffnung, die sich in der Frontwand des Lager-Gehäuses befindet.

Das Befüllen des Behälter-Lagers erfolgt vorzugsweise manuell, und zwar auf der von der Entnahme-Seite abgewandten Belade-Seite, an der vorzugsweise großflächige Türen in der dortigen Heck-Wand geöffnet und das Behälter-Lager nachgefüllt werden kann, was bei entsprechend großem Volumen nur selten, beispielsweise außerhalb der Stoßzeiten einer Gaststätte, ausreicht.

Im Behälter-Lager sind die einzelnen Sorten von Behältern, also die einzelnen Sorten von Gläsern und/oder Flaschen, hintereinander auf einer oder mehreren Abstell-Flächen in mehreren Etagen übereinander abgestellt, und es wird das jeweils vorderste, der Entnahme-Seite benachbarte, Glas oder Behälter entnommen, und die anderen nachgeschoben, sodass sich wieder ein Behälter in der vordersten Position befindet.

Vorzugsweise sind die Behälter in Reihen auf streifenförmigen Abstell-Flächen auf den Auflageleisten von Abstell-leisten abgestellt. Bevorzugt verläuft die Reihe und damit auch die Auflageleisten, auf denen die Behälter aufgestellt sind, horizontal und nicht schräg, da ein Nachrutschen entlang einer Schräge zu einem Umfallen der Behälter führen kann.

Es muss also aktiv von der Entnahme-Seite her durch eine entsprechende Entnahme-Vorrichtung das Entnehmen und Nachschieben der noch in der Reihe verbliebenen Behälter bewirkt werden.

Zu diesem Zweck kann in jeder Abstell-Leiste zwischen dessen beiden Auflageleisten jeweils eine Zugstange vorhanden sein, welches vorzugsweise von außerhalb der Abstell-Leiste angetrieben wird mittels einer Entnahme-Einheit der Entnahme-Vorrichtung, die an das vordere Ende der jeweiligen Abstell-Leiste herangefahren wird, so dass nicht in jeder Abstell-Leiste ein Antrieb für die Zugstange benötigt wird, sondern nur in der Entnahme-Einheit.

Die Entnahme-Vorrichtung umfasst auch einen Entnahme-Förderer, der insbesondere ein endloses, umlaufendes Förderband aufweist, auf den der aus einer Reihe des Lagergestells entnommene Behälter als Zwischen-Ablage aufgestellt wird, und mit dessen Hilfe dieser Behälter zu der Übergabeposition, die sich vorzugsweise in der Nähe der Entnahme-Öffnung befindet, transportiert wird.

Da sich die Position des entnehmenden Behälters in Querrichtung nicht an der gleichen Querposition wie die Übergabe-Position befindet, dient der Entnahme-Förderer der Bewegung eines darauf stehenden Behälters in Querrichtung, und vorzugsweise auch zur Bewegung der dann an dem Entnahme-Förderer ebenfalls befestigten Entnahme-Einheit in Querrichtung, so dass beide zusammen in Querrichtung mittels ein und desselben Motors bewegt werden können.

Da die Behälter im Lagergestell in mehreren Etagen übereinander angeordnet sind, ist auch in der Vertikalen eine Relativbewegung des zu entnehmenden Behälters zwischen seiner Position im Lagergestell und der Höhe der Übergabe-Position notwendig.

Hierfür ist eine Relativbewegung in der Vertikalen zwischen der Entnahme-Vorrichtung, insbesondere dem Entnahme-Förderer einerseits und den Abstellflächen, insbesondere Abstellleisten, des Lagergestells andererseits notwendig, wobei in diesem Fall bevorzugt der Entnahme-Förderer in der Vertikalen verfahrbar ist entlang von Vertikalstreben des Lagergestells, angetrieben mittels eines separaten Motors.

In der Tiefenrichtung befindet sich der Entnahme-Förderer zwischen den vorderen Enden der Ablageleisten und der Übergabe-Position für den Behälter.

Ein Gegenelement-Motor ist für das Bewegen des Gegenelementes der Entnahme-Einheit in und entgegen der Zugrichtung einerseits und für das Ein- und Auskuppeln des Gegenelementes mit dem an der Zugstange befestigten Koppelelement vorhanden.

Diese 3 Motoren sind Bestandteil der Entnahme-Vorrichtung, die die Behälter entnimmt und an die Zufuhr-Einheit übergibt. Da der Preis eines solchen automatisierten Behälter-Lagers möglichst niedrig sein muss, um eine Amortisation gegenüber den eingesparten Personalkosten in einem überschaubaren Zeitraum zu bieten, und die Herstellkosten nicht unerheblich von der Anzahl der vorhandenen Antriebe abhängen, können durch die nur 3 benötigten Motoren sehr geringe Herstellkosten realisiert werden.

Der jeweils vorderste Behälter wird von der jeweiligen Abstell-Leiste entnommen, indem die Zugstange in ihrer Verlaufsrichtung entsprechend den Abständen der Behälter in der Reihe Anschläge aufweist, die zwischen einer aktivierten und einer deaktivierten Position verstellbar sind, wobei sie in der aktivierten Position an dem in Entnahme-Richtung hinteren Teil des Bodens des Behälters anliegen.

Durch nach vorne Ziehen der Zugstange in Zugrichtung bei aktivierten Anschlägen wird die gesamte Reihe von Behältern nach vorne gezogen, und dadurch der vorderste Behälter über das vordere Ende der Abstell-Leiste hinaus auf den dort positionierten Entnahme-Förderer, also bei einem endlos umlaufenden Förderband auf die Oberseite von dessen Obertrum, geschoben.

Dabei sind die Anschläge vorzugsweise so gestaltet, dass sie sich ohne äußere Belastung, beispielsweise allein aufgrund der Schwerkraft, in der aktivierten Position befinden, aber beim Verschieben der Zugstange entgegen der Zugrichtung unter den Böden der Behälter, die dadurch in ihrer Position nicht verschoben werden, nach hinten gleiten können um eine Behälter-Position, so dass sie danach wieder an der Rückseite des nächst-hinteren Behälters in der aktivierten Position anliegen können.

Damit das Gegenelement der Entnahme-Einheit sowohl in der Höhe als auch in der Querrichtung zu der gewünschten Abstell-Leiste, also deren Koppelelement, verfahren werden kann, muss das Gegenelement von dem Koppelelement koppelbar und entkoppelbar sein, was ebenfalls von der Entnahme-Einheit aus durchgeführt wird, vorzugsweise mithilfe desselben Motors, der das Gegenelement auch in und entgegen der Zugrichtung antreibt.

### Verfahren:

Zum automatischen Entnehmen einer gewünschten Art eines Behälters aus dem Behälter-Lager, in dem sich in parallel zueinander, nebeneinander und übereinander verlaufenden Reihen jeweils nur eine Art von Behälter befindet, muss zunächst ermittelt werden oder, insbesondere der Steuerung des Behälter-Lagers, bereits bekannt sein, in welcher oder welchen mehreren Reihen sich die gewünschte Art des Behälters befindet.

Dann wird von der entnahmeseitig vordersten Position dieser Reihe automatisch ein Behälter entnommen und zu einer Übergabeposition, die sich vorzugsweise noch innerhalb des Behälter-Lagers befindet, verbracht.

Danach oder vorzugsweise gleichzeitig mit der Entnahme wird der Rest der Reihe von Behältern um eine Behälter-Distanz entlang der Abstell-Leiste nach vorne bewegt, so dass einer sich wieder an der vordersten Position ein Behälter befindet, und auch auf jeder der nachfolgenden Positionen, so dass vorzugsweise keine Lücke zwischen den Behältern einer Reihe über das Maß der Behälter-Distanz hinaus vorhanden ist.

Der zu entnehmende Behälter wird von der Abstell-Leiste, also den Auflageleisten dieser Abstell-Leiste, auf denen er in vorderster Position steht, hinüber geschoben auf eine auf gleichem Niveau befindliche Zwischenfläche, mittels der er dann zu der Übergabeposition verfahren und gegebenenfalls auf diese umgesetzt wird.

Die Übergabeposition kann jedoch auch lediglich eine bestimmte Position, insbesondere in der Vertikalen und in der Querrichtung, sein, an der sich der Behälter befinden muss, wobei er sich noch auf dem Entnahme-Förderer befinden kann, so dass beispielsweise manuell der an dieser Position stehende Behälter durch Hineingreifen mit der Hand durch die Entnahme-Öffnung ins Innere des Behälter-Lagers ergriffen und entnommen werden kann.

Die Zwischenfläche ist zu diesem Zweck zusammen mit dem darauf stehenden Behälter insbesondere in Querrichtung und/oder in der Vertikalen verfahrbar, jedoch ist vorzugsweise keine Bewegung in der Tiefenrichtung notwendig.

Vorzugsweise wird die Befüllung des Behälter-Lagers und Entnahme aus dem Behälter-Lager durch die Steuerung so organisiert, dass nach Möglichkeit nur solche Behälter, insbesondere Gläser, entnommen werden, die sich bereits längere Zeit in dem meist gekühlten Behälter-Lager befinden und damit nicht mehr von dem zuvor durchgeführten Spülvorgang erwärmt sind.

Vorzugsweise wird zu diesem Zweck das Behälter-Lager von der einen Seite, der Belade-Seite, her befüllt, indem neue Behälter hinter das hintere Ende der Reihe angestellt werden, und auf der gegenüberliegenden Seite der Entnahme-Seite, der gewünschte Behälter entnommen, sodass durch die Verweilzeit der Behälter im Behälter-Lager aufgrund dieses first-in-first-out-Prinzips bis zu deren Entnahme eine ausreichende Kühlung der gespülten, erwärmten Behälter erfolgt ist.

Dabei kann der Bestand der verschiedenen Arten von Behältern im Behälter-Lager automatisch überwacht werden - wofür natürlich entsprechende Sensoren vorhanden sein müssen - und bei Unterschreiten eines Mindest-Bestandes ein Alarmsignal abgegeben werden, um den Bediener zur Nachfüllung zu veranlassen

Dabei kann das Behälter-Lager aus Platzgründen weiter entfernt von der Schank-Einheit positioniert werden, insbesondere außerhalb des Schankraumes, sodass dann die Strecke dazwischen mittels eines Zuführ-Förderers überbrückt wird, sodass dann zunächst das richtige Glas aus dem Behälter-Lager entnommen und auf den Zufuhr-Förderer umgesetzt werden muss - was in aller Regel innerhalb des meist gekühlten Lager-Gehäuses geschieht - und an der Schank-Einheit das Glas automatisch von dem Zufuhr-Förderer auf die entsprechende Abstell-Basis umgesetzt werden muss.

Zum Reinigen des Behälter-Lagers werden vorzugsweise
- die Abstellleisten aus dem Lager-Gestell entfernt, wobei sie vorzugsweise lediglich auf Querstreben aufliegen, vorzugsweise in bestimmten Querpositionen gegenüber diesen Querstreben verrastet sind, und separat außerhalb des Lager-Gehäuses gereinigt werden, nachdem vorzugsweise die Auflageleisten einerseits und die Zugstange andererseits voneinander getrennt wurden und getrennt gereinigt werden,
- die Entnahme-Vorrichtung, insbesondere der Entnahme-Förderer, aus dem Lager-Gestell entnommen und, gegebenenfalls nach weiterer Zerlegung, außerhalb dessen gereinigt wird.

Dann kann innerhalb des Lagergehäuses das gesamte Lager-Gestell auf einfache Art und Weise, beispielsweise mit einem Dampf-Strahler oder Hochdruck-Reiniger, abgespritzt und gereinigt werden, während die entnommenen Teile außerhalb entweder ebenso behandelt werden können oder bei ausreichend kleiner Dimensionierung in einer Spülmaschine gereinigt werden können.

### c) Ausführungsbeispiele

Ausführungsformen gemäß der Erfindung sind im Folgenden beispielhaft näher beschrieben. Es zeigen:
- **Figur 1:**: ein gefülltes Behälter-Lager in perspektivischer Ansicht,
- **Figur 2a:**: das gefüllte Behälter-Lager gemäß Figur 1 in der Frontansicht,
- **Figur 2b:**: das gefüllte Behälter-Lager gemäß Figur 1 in der Seitenansicht,
- **Figur 2c:**: das gefüllte Behälter-Lager gemäß Figur 1 in der Aufsicht, jedoch nur mit wenigen Behältern auf nur einer einzigen dargestellten Abstell-Leiste,
- **Figur 2d:**: eine weitere Seitenansicht des Behälter-Lagers gemäß Figur 2c nur mit einer Abstell-Leiste und darauf nur wenigen Gläsern,
- **Figuren 3a-e:**: die Entnahme-Vorrichtung in der Seitenansicht in unterschiedlichen Funktionszuständen vor dem Entnehmen eines bestimmten Behälters,
- **Figuren 4a, b:**: die Entnahme-Einheit beim Herüberschieben des Behälters von einer Abstell-Leiste auf den Entnahme-Förderer,
- **Figuren 5a, b:**: den den entnommenen Behälter abtransportierenden Entnahme-Förderer in der Seitenansicht sowie in der Frontansicht.

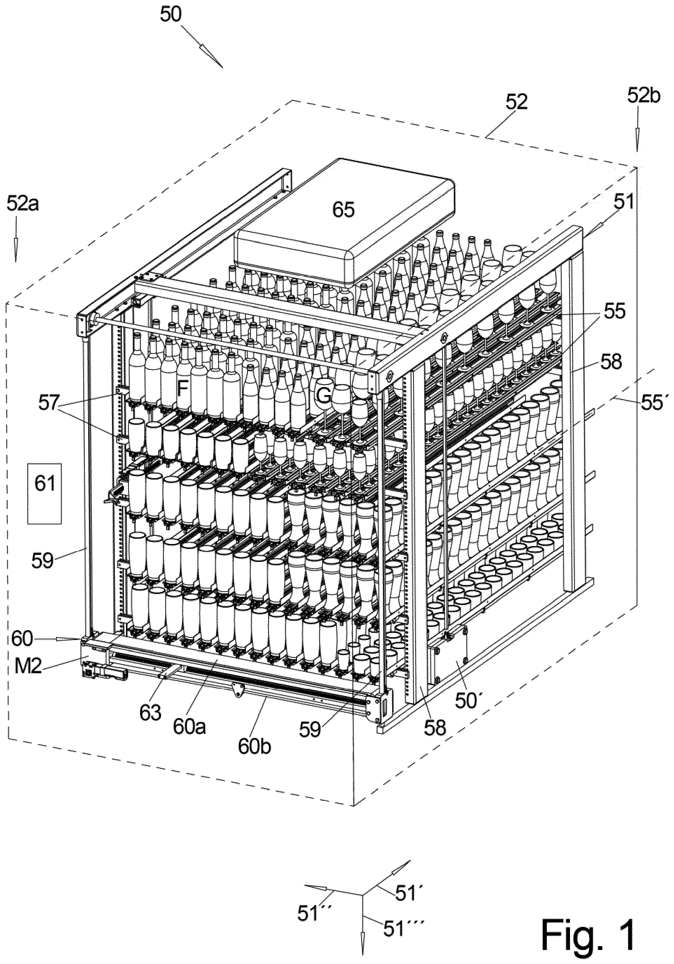

Wie die **Figuren 1 bis 2c** zeigen, besteht das Behälter-Lager 50 im Wesentlichen aus einem Lager-Gestell 51, in dem in mehreren Etagen übereinander jeweils auf Abstell-Leisten 55, die in Tiefenrichtung 51' des Lager-Gestells 51 und damit des Getränke-Lagers 50 verlaufen, in Reihen hintereinander jeweils die gleiche Sorte von Behältern, seien es Flaschen F oder Gläser G, abgestellt sind.

Das gesamte Lager-Gestell 51 ist im Inneren eines Lager-Gehäuses 52 aufgenommen, dessen Innenraum 53 von einer vorzugsweise auf dem Dach des Lager-Gehäuses 52 sitzenden Temperier-Einheit, meist einer Kühleinheit 65, temperiert werden kann.

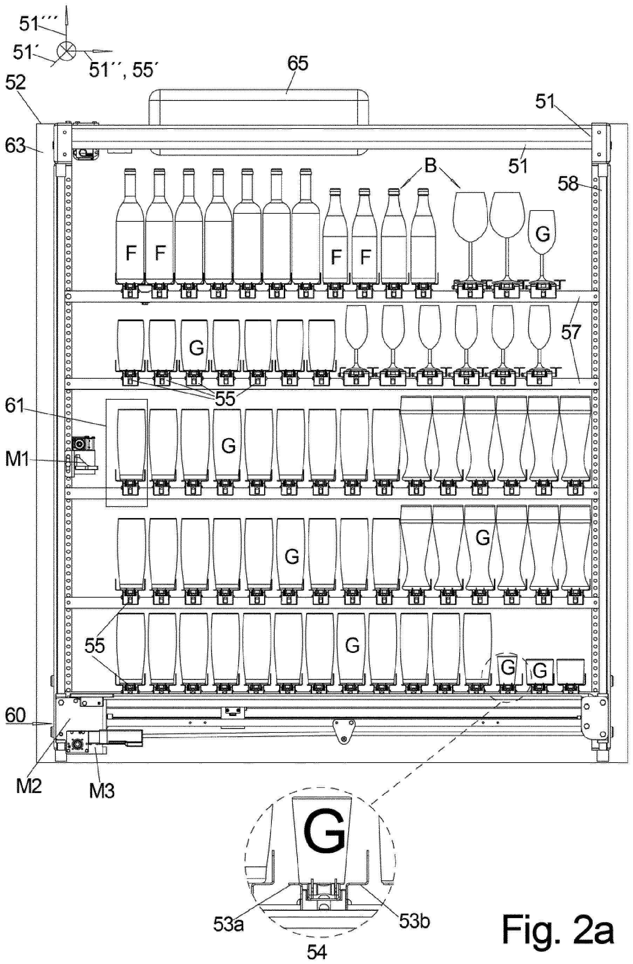

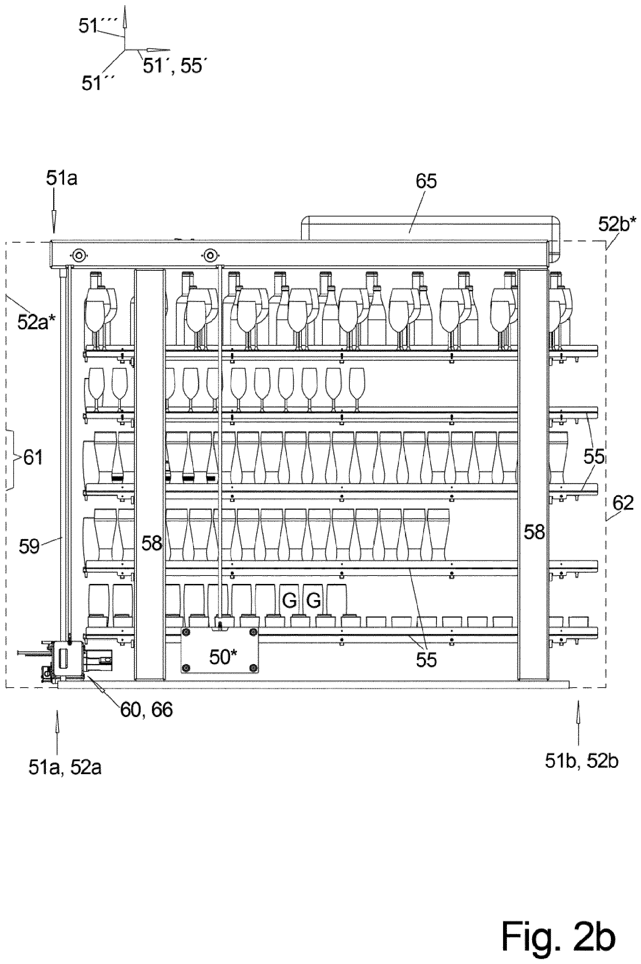

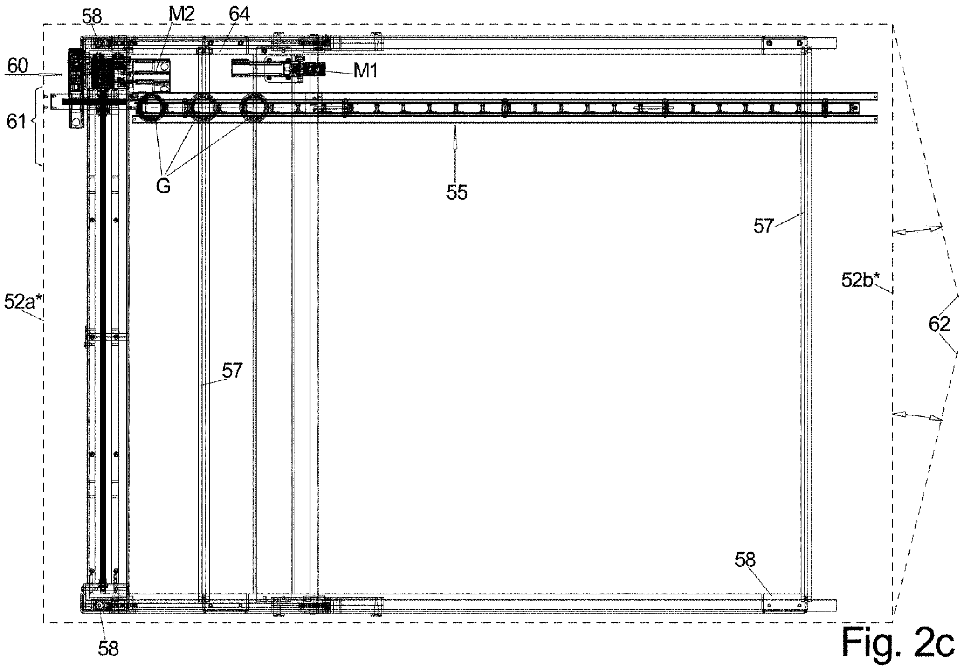

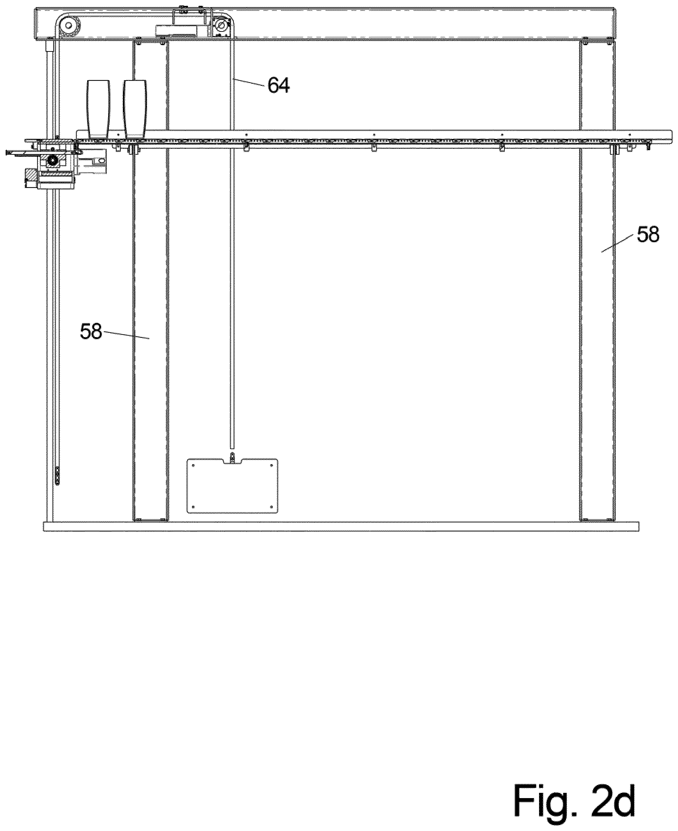

Am entnahme-seitigen Ende 51a des Lager-Gestells 51 ist an dem Lager-Gestell 51 ferner als Entnahme-Vorrichtung ein Entnahme-Förderer 60 vorhanden, der entlang von Vertikal-Führungen 59 in der Vertikalen 51'" verfahren werden kann, jedoch in den Figuren **1** **sowie 2a, b** in der untersten Position dargestellt ist.

Der Entnahme-Förderer 60 wird in der Vertikalen 51'" mit Hilfe eines Zugriemens 64 - der umlaufend oder endlich sein kann - bewegt.

Die einzelnen Abstell-Leisten 55 bestehen - wie am besten in der vergrößerten Darstellung in **Figur 2a** erkennbar - aus zwei parallel mit Abstand nebeneinander in Erstreckungsrichtung 55' der Abstell-Leiste 55 verlaufenden Auflage-Leisten 53a, b in Form von gekanteten Blechen, von denen wenigstens das eine einen über die Aufstandsfläche für die Behälter B aufragenden Seitenschenkel aufweist, der den entsprechenden Behälter B in Querrichtung 51" in seiner Bewegung begrenzt, während in der anderen Querrichtung der analoge aufragende Schenkel der nächsten benachbarten Abstell-Leiste 55 dient.

Wie am besten **Figur 2a** erkennen lässt, sind die einzelnen Abstell-Leisten 55, die mit ihrer Erstreckungsrichtung 55' in der Tiefenrichtung 51' der Lager-Gestells 51 verlaufen - weshalb diese beiden Richtungen für die Zwecke der vorliegenden Beschreibung gleichgesetzt werden - auf horizontalen Querstreben 57 aufgesetzt und können an diesen vorzugsweise auch an unterschiedlichen Querpositionen in der horizontalen Querrichtung 51" befestigt, insbesondere verrastet, werden.

Darüber hinaus können diese Querstreben 57 in unterschiedlichen Höhenpositionen, hier in dafür vorgesehenen Löchern einer Lochreihe, an den vorderen und hinteren Vertikalstreben 58 befestigt werden, je nach Höhe der auf den einzelnen Etagen, also zwischen den in der Höhe benachbarten Querstreben 57, aufzunehmenden Behältern B.

Wie die perspektivische Ansicht der **Figur 1** und die Frontansicht der **Figur 2a** erkennen lassen, befindet sich auf einer Abstell-Leiste 55, also in einer Reihe von Behältern, immer nur die gleiche Sorte von Behälter B, also bestimmte Flaschen und damit Getränke-Sorten oder bestimmte Gläser.

Dabei werden diese Behälter immer von dem vorderen Entnahme-Ende 51a des Lager-Gestells 51 entnommen, sodass die Reihe immer an dieser entnahme-seitig vordersten Position der Abstell-Leiste 55 beginnt, die je nach Befüllungsgrad nach hinten nicht vollständig gefüllt sein muss, wie beispielsweise auch in der Seitenansicht der **Figur 2b** zu erkennen.

Beide Auflage-Leisten 53a, b haben jedoch vorzugsweise an ihren einander zugewandten Enden ihrer horizontalen Schenkel einen nach unten weisenden Schenkel, an denen Führungen für eine dazwischen angeordnete und in Erstreckungsrichtung 55' gegenüber den Auflage-Leisten 53a, b verschiebbar geführte Zugstange 54 vorhanden sind.

Die Zugstangen 54 dienen dem Vorwärtsschieben der Reihe von Behältern B in Richtung vorderes, entnahme-seitiges Ende 51a auf den Auflage-Leisten 53a, b.

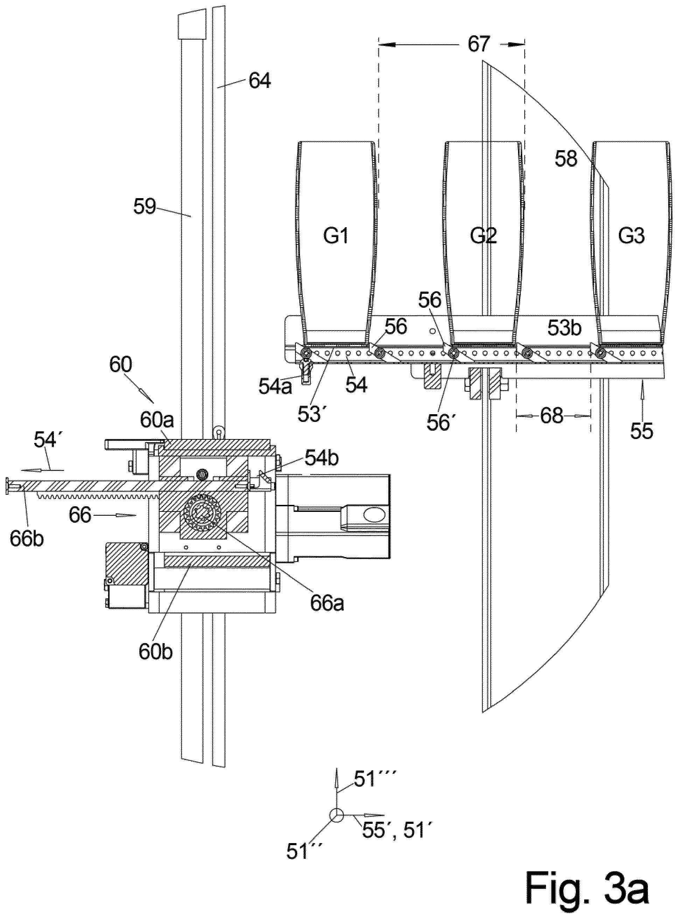

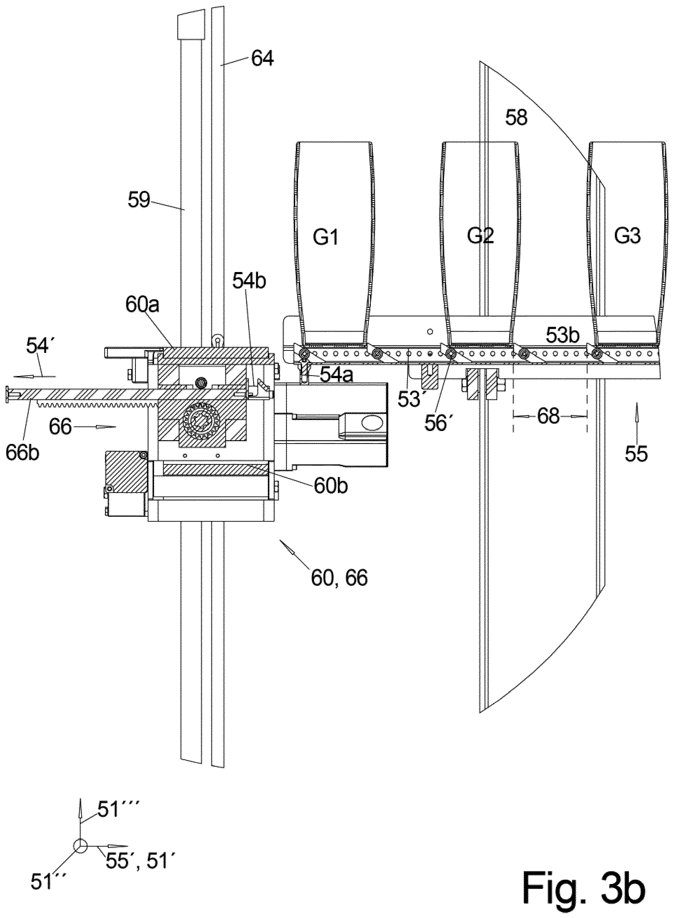

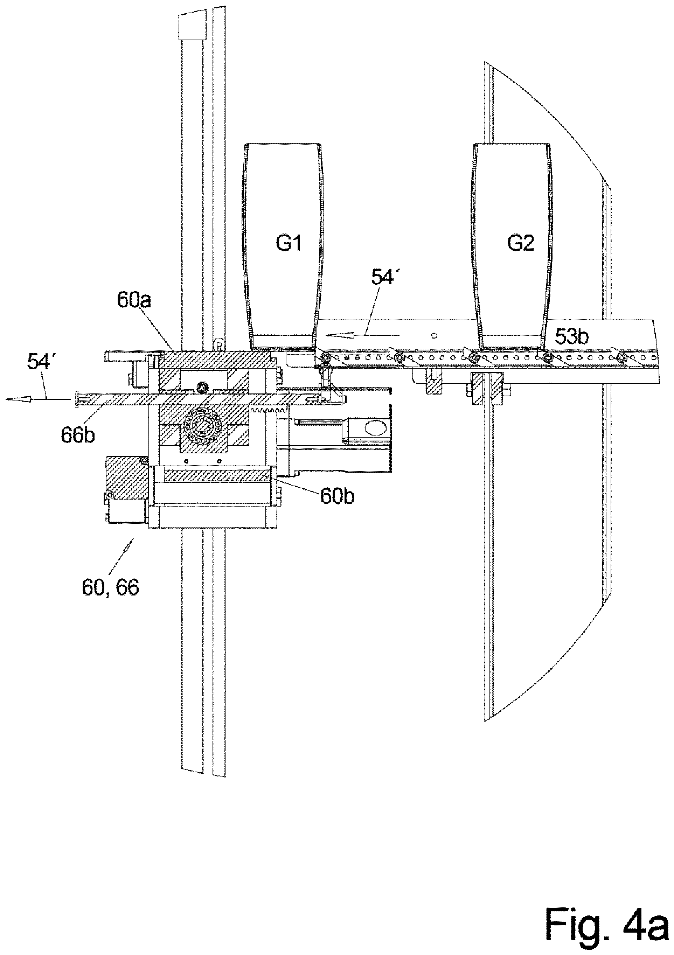

Die Zugstangen 54 besitzen - wie am besten in den Seitenansichten der **Figuren 3a** **- e** erkennbar - in vorzugsweise regelmäßigem Abstand in ihrer Erstreckungsrichtung 55' angeordnete, verschwenkbare Anschläge 56, die in ihrer beispielsweise in **Figur 3a** **und** **3b** dargestellten aktivierten Position in den Bewegungsweg der Behälter, beispielsweise eines Glases G, über die Aufstandsfläche auf den Auflage-Leisten 53a, b nach oben hinausragen. Dadurch greift der Anschlag beim Vorwärtsziehen der Zugstange 54 in Zugrichtung 54' - wie in **Figur 4a** eingezeichnet - am Boden des Behälters, hier eines Glases G, an und zieht dieses entlang der Abstell-Leiste 55 mit nach vorne.

Eine solche Abstell-Leiste 55 stellt somit eine als Baugruppe handhabbare Einheit dar.

Dabei muss nicht an jedem Anschlag 56 ein Glas G stehen, denn häufig besitzen diese Gläser G im oberen Bereich einen größeren Durchmesser als am Boden, weshalb dann nur an jedem zweiten Anschlag 56 ein Glas G anliegen kann, also eine Behälter-Teilung 67, gemessen vom hinteren Ende eines Behälters zum hinteren Ende des nächsten Behälters, meist der doppelten Anschlag-Teilung 68 entspricht.

Die Anschläge 56 sind jeweils als zwei-armiger Hebel ausgestaltet, und um eine in Querrichtung 51" verlaufende Schwenkachse 56' verschwenkbar. Der entgegen der Zugrichtung 54' gerichtete Schenkel ist schwerer und erzeugt um die Schwenkachse 56' ein größeres Drehmoment als der in Zugrichtung 54' weisende Schenkel, dessen freies Ende als Anschlag 56 wirkt.

Die **Figuren 3a** **- c** zeigen die Anschläge 56 in der aktivierten Stellung, da der hintere, schwerere Schenkel schwerkraft-bedingt diesen schwereren Hebelteil nach unten bewegt, der dann insbesondere auf einer horizontalen Fläche der Auflage-Leisten 53a, b aufliegt.

In **Figur 3b** beginnt der Entnahme-Vorgang des dort dargestellten, an dem entnahme-seitigen Ende dieser Abstell-Leiste 55 vorhandenen, Glases G1, indem der Entnahme-Förderer 60, der auch die Entnahme-Einheit 66 enthält, entlang der Vertikalführung 59 mit Hilfe des Zugriemens 64 gesteuert hochgezogen wird, bis sich die Oberseite des Obertrums 60a des Quer-Förderers 60 gemäß **Figur 3b** fluchtend auf gleicher Höhe mit der Auflage-Fläche 53' der Abstell-Leiste 55 befindet.

Von der Zugstange 54 ragt in ihrem vorderen Endbereich, möglichst nahe am vorderen Ende, als Koppelelement 54a ein Zapfen oder ein Fortsatz nach unten.

In der Entnahme-Einheit 66 ist eine Zahnstange 66b in und entgegen der Zugrichtung 54' gesteuert verlagerbar, angetrieben von z.B. einem damit kämmenden Ritzel 66a, wobei sich an dem hinteren, entgegen der Zugrichtung 54' weisenden, Ende der Zahnstange 66b ein Gegenelement 54b ausgebildet ist, welches mit dem Koppelelement 54a der Zugstange 54 koppelbar ist.

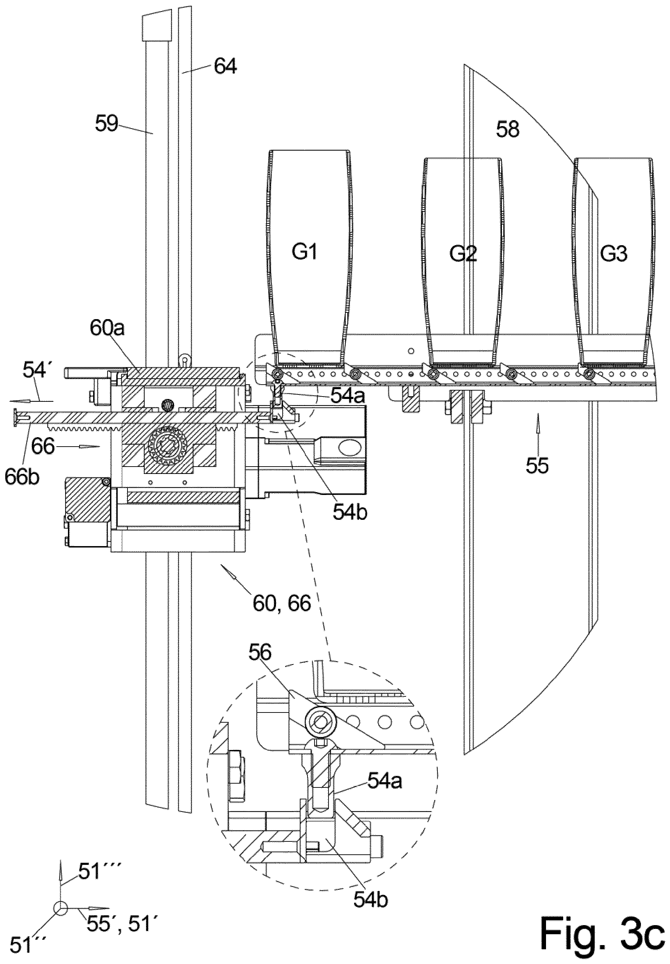

Die Zahnstange 66b mit dem Gegenelement 54b befindet sich in **Figur 3c** in Blickrichtung, also in der horizontalen Querrichtung 51", zunächst noch versetzt zu dem Koppelelement 54a, aber zu diesem mit seiner Aussparung fluchtend. Das Gegenelement 54b ist hier eine in Querrichtung 51" verlaufende Nut, die an ihren stirnseitigen Enden offen ist, und in die das Koppel-Element 54a hineinpasst.

Indem die Entnahme-Einheit 66 mit ihrem Gegenelement 54b mit Hilfe des Entnahme-Förderers 60 auf die Querposition des Koppelelementes 54a gebracht wird, werden die beiden in Eingriff gebracht.

Von dieser Position aus wird die Zahnstange 66 b entgegen der Zugrichtung 54', also in der negativen Zugrichtung -54', bewegt und dadurch die Zugstange 54 in die Abstell-Leiste 55 hineingeschoben.

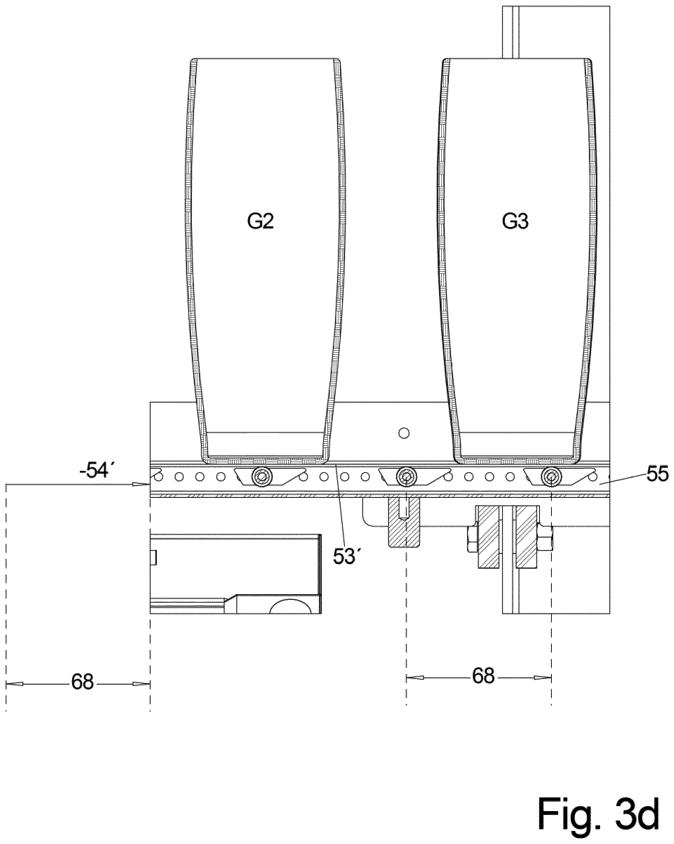

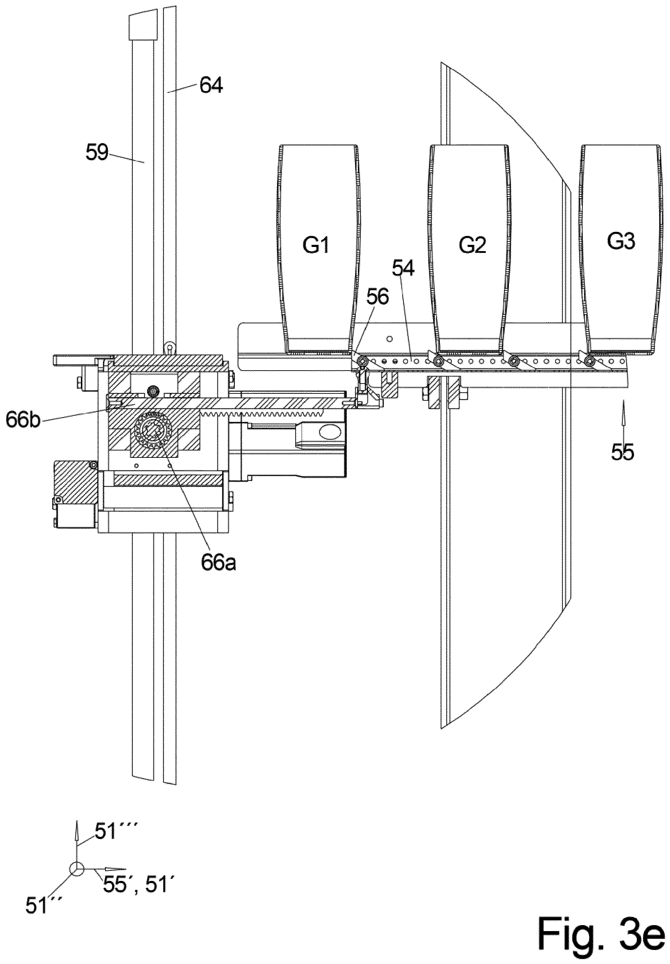

Dabei werden gemäß **Figur 3d** die in Zugrichtung 54 weisenden Hebelarme der Anschläge 56 von den darüber stehenden Gläsern G nach unten gedrückt, sodass die die Zugstange 54 mit all ihren Anschlägen 56 unter den an unveränderter Position auf den Auflage-Leisten 53a, b stehen bleibenden Gläsern soweit zurückgeschoben wird, bis gemäß **Figur 3e** sich der vorderste, entnahme-seitig also erste oder zweite, Anschlag 56 der Zugstange 54 hinter dem vordersten, zu entnehmenden Glas G1 nach oben schwenken kann in die aktivierte Stellung.

Sobald diese erreicht ist, wird gemäß **Figur 4a** mittels des Ritzels 66a, dessen Drehrichtung geändert wird, die Zahnstange 66b in der umgekehrten Richtung, also in Zugrichtung 54', bewegt und dadurch das vorderste Glas G1 über das vordere Ende der Auflage-Leisten 53a, b hinausgeschoben auf die auf gleicher Höhe oder minimal niedriger positionierte Oberseite des Obertrums 60a des Entnahme-Förderers 60, der nur mit einem sehr geringen Abstand zu den vorderen Enden der Auflage-Leiste 53a, b angeordnet ist.

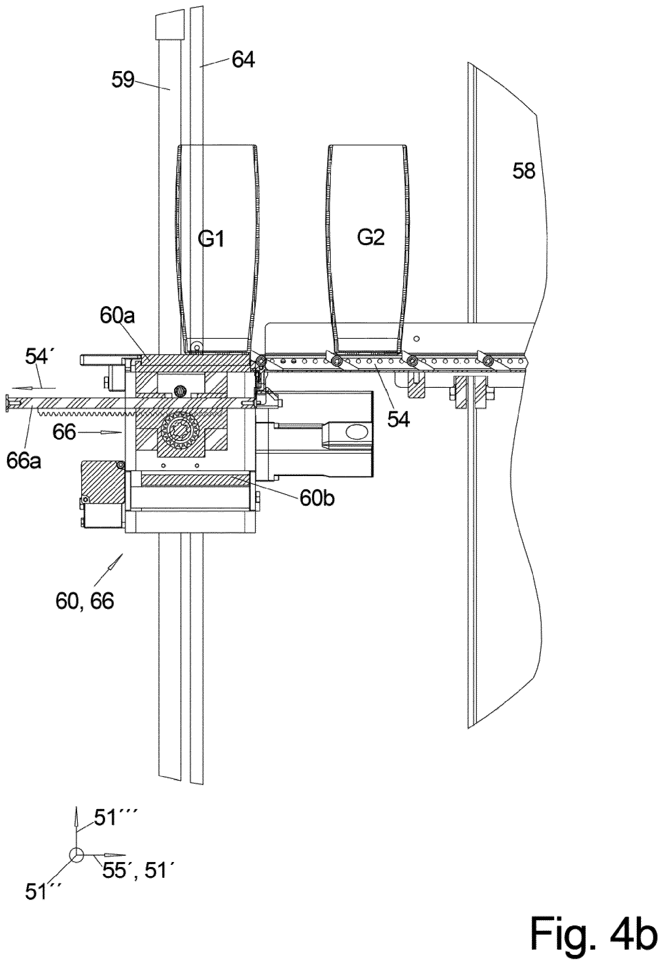

Dies wird soweit fortgesetzt, bis gemäß **Figur 4b** der Anschlag 56 sich in der maximal an den Entnahme-Förderer 60 annäherbaren Position befindet und sich dann das zu entnehmende Glas G1 vollständig auf dem Obertrum 60a des Entnahme-Förderers 60 befindet.

Während dieses Herüberschiebens auf den Entnahme-Förderer 60 werden auch alle weiteren Gläser G2, G3 usw. dieser Reihe ebenfalls mittels der Zugstange 54 nach vorn zum entnahme-seitigen Ende bewegt, sodass sich dann, wenn sich das Glas G1 vollständig auf dem Entnahme-Förderer 60 befindet, das Glas G2 an vorderster Position auf dieser Abstell-Leiste 55 steht.

Anschließend wird durch Bewegen der Zugstange 54 in die negative Zugrichtung -54' mittels der Entnahmeeinheit 66 die Zugstange 54 wieder in die Ausgangsposition gebracht, in der die Zugstange 54 vorzugsweise nicht über das vordere Ende der Auflage-Leisten 53a, b vorsteht, beispielsweise die Position, wie in **Figur 3a****, b** beschrieben und dargestellt.

Danach wird die Entnahme-Einheit 66 außer Eingriff der Zugstange 54 gebracht, indem die Zahnstange 66a mittels des Entnahme-Förderers 60 außer Eingriff mit dem Koppelelement 54a gebracht wird.

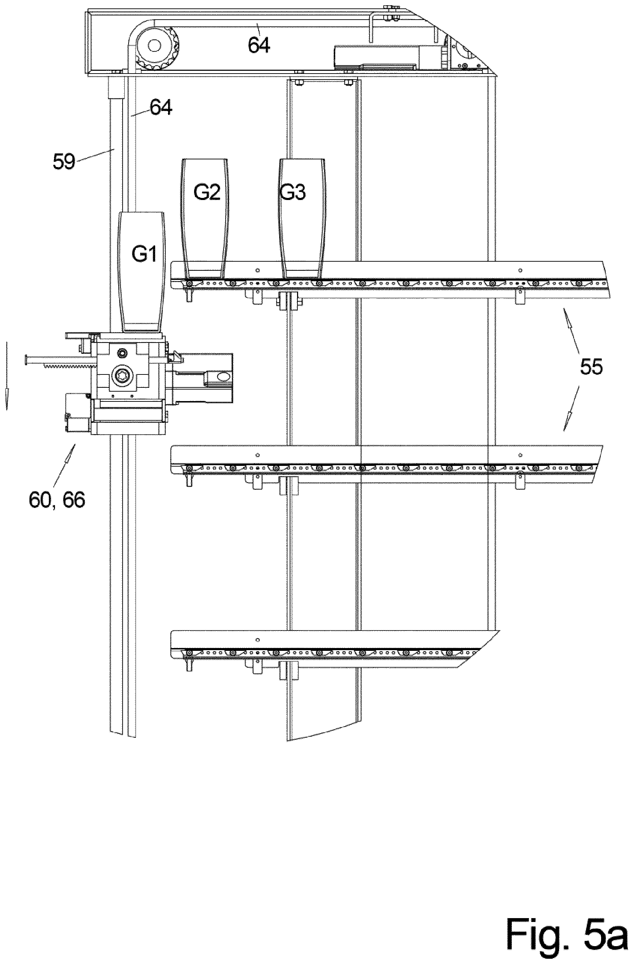

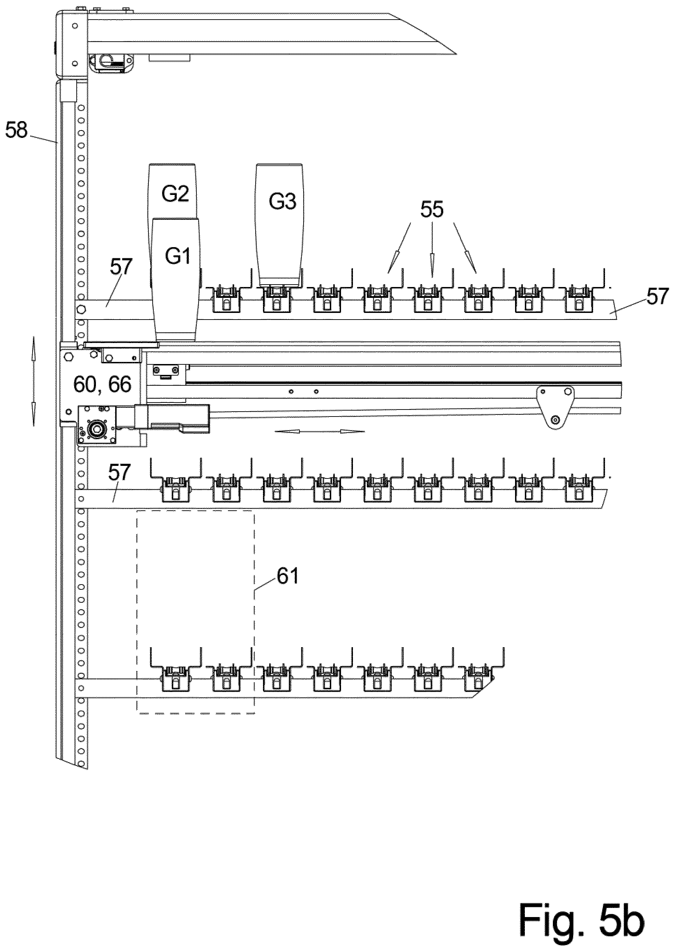

Anschließend kann gemäß der Seitenansicht der **Figur 5a** sowie der Frontansicht gemäß der **Figur 5b** der Entnahme-Förderer 60 gesteuert entlang der Vertikalführung 59 und angetrieben mittels des Zugriemens 64 auf die gewünschte Höhe verfahren werden, vorzugsweise so, dass sich das Glas G1 - nachdem es auch mittels des Entnahme-Förderers 60 auf die passende Querposition gebracht wurde, unmittelbar hinter der Entnahme-Öffnung 61 befindet, und durch diese entnommen werden kann.

### BEZUGSZEICHENLISTE

- 50: Behälter-Lager
- 50*: Steuerung
- 50a,b,c: Etagen
- 50a1, 50a2: Zeile, Reihe
- 50b1, 50b2: Zeile, Reihe
- 51: Lager-Gestell
- 51': Tiefenrichtung
- 51": horizontale Querrichtung
- 51'": Vertikale
- 51a: entnahmeseitiges Ende
- 51b: beladeseitiges Ende
- 52: Lager-Gehäuse
- 52a: entnahmeseitiges Ende
- 52b: beladeseitiges Ende
- 52a*: Frontwand
- 52b*: Heckwand
- 53a, b: Auflageleisten
- 53': Auflage-Fläche
- 54: Zugstange
- 54': Zugrichtung
- 54a: Koppelelement
- 54b: Gegenelement
- 55: Abstell-Leiste
- 56: Anschlag
- 57: Querstrebe
- 58: Vertikalstrebe
- 59: Vertikalführung
- 60: Entnahme-Förderer
- 60a: Obertrum
- 60b: Untertrum
- 61: Entnahme-Öffnung
- 62: Hecktür
- 63: Innenraum
- 64: Zugriemen
- 65: Temperiereinheit, Kühleinheit
- 66: Entnahmeeinheit
- 66a: Ritzel
- 66b: Zahnstange
- 67: Behälterteilung
- 68: Anschlagteilung

- B: Behälter
- F: Flasche
- G: Glas
- B': Axialrichtung
- M1: Vertikal-Motor
- M2: Förderband-Motor
- M3: Gegenelement-Motor

## Patentansprüche

1. **Behälter-Lager** (50) zum Bevorraten und automatischen Entnehmen von Behältern (B), insbesondere Gläsern (G) und/oder Flaschen (F), die in einem Lager-Gestell (51) auf Abstellflächen,
- auf mehreren Etagen (50a, b, c) übereinander
- in jeweils mehreren in Tiefenrichtung (51') des Lager-Gestells (51) parallel nebeneinander verlaufenden Reihen (z.B. 50a1, 50a2) auf jeder der Etagen (z.B. 50a)
bevorratet sind, wobei das Behälter-Lager (50)
- eine Entnahme-Vorrichtung für Behälter (B) umfasst,
- ein das Lager-Gestell (51) umgebendes Lager-Gehäuse (52) aufweist,
- sowie eine wenigstens die beweglichen Teile des Behälter-Lagers (50) steuernde Steuerung (50*) aufweist,
**dadurch gekennzeichnet, dass**
- die Entnahme-Vorrichtung einen in der horizontalen Querrichtung (51.1') verfahrbaren Entnahme-Förderer (60) umfasst,
- am entnahmeseitigen Ende (52a) in der Frontwand (52a*) eine, insbesondere verschließbare, Entnahmeöffnung (61) vorhanden ist,
- am beladeseitiges Ende (52b) in der Heckwand (52 b*) wenigstens eine Hecktür (62) vorhanden ist.

2. Behälter-Lager nach einem der vorhergehenden Ansprüche,
**dadurch gekennzeichnet, dass**
- entweder der Entnahme-Förderer (60) in der Höhe gesteuert verfahrbar ist, insbesondere entlang von Vertikalstreben (58) des Lagergestells (51),
- oder zumindest Teile des Lager-Gestells (51) in der Höhe gesteuert verfahrbar sind.

3. Behälter-Lager nach einem der vorhergehenden Ansprüche,
**dadurch gekennzeichnet, dass**
- der Entnahme-Förderer (60) innerhalb des Lager-Gehäuses (51) zwischen der Entnahmeöffnung (61) und den Abstellflächen für die Behälter (B) angeordnet ist
und/oder
- eine den Innenraum (63) des Lager-Gehäuses (52) temperierende Temperiereinheit (65), insbesondere kühlende Kühleinheit (65), vorhanden ist.

4. Behälter-Lager nach einem der vorhergehenden Ansprüche,
**dadurch gekennzeichnet, dass**
- das Behälter-Lager (50) maximal 5 Motore, besser nur maximal 4 Motore, aufweist, wobei insbesondere
- ein Vertikal-Motor (M1) den gesamten Entnahme-Förderer (60) in der Höhe verfährt,
- ein Förderband-Motor (M2) das Förderband des Entnahme-Förderers (60) antreibt,
- ein Gegenelement-Motor (M3) das Gegenelement (54b) in und entgegen der Zugrichtung antreibt.
(Abstellflächen)

5. Behälter-Lager nach einem der vorhergehenden Ansprüche,
**dadurch gekennzeichnet, dass**
die Abstellflächen aus in Tiefenrichtung (51') verlaufenden Abstell-Leisten (55) bestehen, auf der jeweils eine Reihe (z.B. 50a1, 50a2) von Behältern (B) abgestellt werden kann.

6. Behälter-Lager nach einem der vorhergehenden Ansprüche,
**dadurch gekennzeichnet, dass**
- jede Abstell-Leiste (55) parallel im Abstand zueinander verlaufende Auflageleisten (53a, b) umfasst,
- im Abstand zwischen den Auflageleisten (53a, b) eine in Verlaufsrichtung (55') der Abstell-Leiste (55), insbesondere der Tiefenrichtung (51'), verlaufende und geführte Zugstange (54) mit nach oben, in den Bewegungsweg der Böden der Behälter (B) ragenden, zwischen einer aktivierten und einer deaktivierten Stellung beweglichen, Anschlägen (56) vorhanden ist.

7. Behälter-Lager nach einem der vorhergehenden Ansprüche,
**dadurch gekennzeichnet, dass**
- die Anschläge (56) sich im unbelasteten Zustand, insbesondere schwerkraftbedingt, in der aktivierten Stellung im Bewegungsweg der Behälter (B) befinden,
- insbesondere jeder Anschlag (56) ein zweiarmiger Hebel ist, der in der aktivierten, insbesondere schwerkraftbedingt sind, Stellung eine in Auszugrichtung (54') der Zugstange (54) ansteigende Oberseite (54') aufweist und dessen in Zugrichtung weisendes Ende (54a) in den Bewegungsweg der Behälter (B) ragt und dessen anderes Ende (54b) unterhalb der Höhe der Auflageleisten (53a, b) endet.

8. Behälter-Lager nach einem der vorhergehenden Ansprüche,
**dadurch gekennzeichnet, dass**
- die Zugstange (54) an ihrem vorderen, entnahmeseitigen Ende ein Koppelelement (54a) aufweist und
- eine Entnahmeeinheit (66) ein in der Verlaufsrichtung (55') der Abstell-Leiste (55), insbesondere in Tiefenrichtung (51'), verfahrbares, aktivierbares und deaktivierbares, Gegenelement (54b) aufweist.

9. Behälter-Lager nach einem der vorhergehenden Ansprüche,
**dadurch gekennzeichnet, dass**
die Entnahmeeinheit (66) in Querrichtung (51") gesteuert beweglich am Lager-Gestell (51) befestigt ist, insbesondere Bestandteil des Entnahme-Förderers (60) ist.

10. Behälter-Lager nach einem der vorhergehenden Ansprüche,
**dadurch gekennzeichnet, dass**
- die Abstell-Leisten (55) auf den in Querrichtung (51") verlaufenden Querstreben (57) des Lager-Gestells (51) aufliegen und in ihrer Querposition verstellbar und fixierbar sind,
insbesondere
- die Querstreben (57) in der Höhe verstellbar an Vertikalstreben (58) des Lager-Gestells (51) befestigt sind.
(Entnahmeeinheit)

11. Behälter-Lager nach einem der vorhergehenden Ansprüche,
**dadurch gekennzeichnet, dass**
- die Entnahmeeinheit (66) mit dem Obertrum oder Untertrum des Förderbandes des Entnahmeförderers (60) wirkverbunden ist, insbesondere fest gekoppelt ist,
und/oder
- die Oberseite des Obertrums des Entnahmeförderers (60) auf oder geringfügig unterhalb der vorderen Enden der Auflageflächen der Auflage-leisten (53a, b) angeordnet sind oder gesteuert auf diese Höhe bringbar sind.

12. **Verfahren** zum Betreiben eines automatischen Behälter-Lagers (50),
**dadurch gekennzeichnet, dass**
zum automatischen Entnehmen der richtigen Art des Behälters (B), insbesondere Glas (G) oder Flasche (F), aus dem Lager-Gestell (51),
- automatisch diejenige wenigstens eine Reihe (zum Beispiel 51a1, 51a2) ermittelt wird, in der sich die gewünschte Art des Behälters (B) befindet,
- ein solcher Behälter (B) von der entnahmeseitig vordersten Position dieser sich in Erstreckungs-Richtung (55') erstreckenden Reihe entnommen und
- zu einer Übergabe-Position, die sich vorzugsweise innerhalb des Behälter-Lagers (50) befindet, bewegt wird.

13. Verfahren nach einem der vorhergehenden Verfahrensansprüche,
**dadurch gekennzeichnet, dass**
nach oder zusammen mit, der Entnahme des in vorderster Position in der Reihe stehenden Behälters (B1) die restlichen Behälter (B2 bis Bn) der Reihe um eine Behälter-Distanz in Richtung Entnahmeseite bewegt werden, insbesondere aktiv dorthin gezogen oder geschoben werden.

14. Verfahren nach einem der vorhergehenden Verfahrensansprüche,
**dadurch gekennzeichnet, dass**
- der in vorderster Position in der Reihe stehende Behälter (B1) von seiner Abstellfläche auf eine Zwischenfläche übergeben wird, die zwischen den vorderen Enden jeder der Reihen in jeder der Etagen und der Übergabe-Position verfahrbar ist, insbesondere in Querrichtung (51") und/oder in der Vertikalen (51'"), vorzugsweise jedoch nicht in Tiefenrichtung (51')
und/oder
- der Innenraum des Lager-Gehäuses (52) temperiert wird, insbesondere gekühlt wird.

15. Verfahren nach einem der vorhergehenden Verfahrensansprüche,
**dadurch gekennzeichnet, dass**
für jede Art von Behältern (B) der Bestand im Behälter-Lager (50) automatisch überwacht und bei Unterschreiten eines Mindest-Bestandes ein Alarmsignal abgegeben wird.

16. Verfahren nach einem der vorhergehenden Verfahrensansprüche,
**dadurch gekennzeichnet, dass**
zum Befüllen des Behälter-Lagers (50), neue Behälter (B) an den hinteren Enden der Reihen, die die gleiche Art von Behältern (B) enthalten, angestellt werden.

17. Verfahren nach einem der vorhergehenden Verfahrensansprüche,
**dadurch gekennzeichnet, dass**
zum Reinigen des Behälter-Lagers (50),
- die Auflageleisten (55) aus dem Lager-Gestell (51) entnommen und separat gereinigt werden,
- das leere Lager-Gestell (51) im Lager-Gehäuse (52) gereinigt wird,
- gegebenenfalls nach Entfernen des Entnahme-Förderers (52) aus dem Lager-Gehäuse (52) und dessen separater Reinigung außerhalb des Lager-Gehäuses (52).
